# EUROPÄISCHE PATENTSCHRIFT

(11) **EP 0 424 310 B1**
(45) Veröffentlichungstag und Bekanntmachung des Hinweises auf die Patenterteilung: **12.05.1993**
(21) Anmeldenummer: 90810717.0
(22) Anmeldetag: 19.09.1990
(51) Int. Cl.: F04B 39/04, F16J 15/00

(54) **Kolbenkompressor mit Kolbenstangenführungslager**
Piston compressor having pistonrod guide bearings
Compresseur à pistons avec palier-guides pour les bielles

(30) Priorität: 18.10.1989 CH 3785/89
(43) Veröffentlichungstag der Anmeldung: 24.04.1991
(73) Patentinhaber: Maschinenfabrik Sulzer-Burckhardt AG, CH-4002 Basel (CH)
(72) Erfinder: Vogt, Paul, CH-8405 Winterthur (CH)
(74) Vertreter: Steller, Manfred

(56) Entgegenhaltungen:
- DE-B- 1 039 190
- DE-B- 1 144 873
- DE-C- 948 548
- GB-A- 1 168 335
- US-A- 3 185 487

## Beschreibung

Die Erfindung bezieht sich auf einen Kolbenkompressor mit den Merkmalen des Oberbegriffs des Anspruchs 1.

Bei einem bekannten Kolbenkompressor dieser Art (EP-PS 95037, Fig.1) sind im Gehäuse des Kolbenstangenführungslagers mehrere Kanäle vorhanden, die in das Innere des Kurbelgehäuses münden und dazu dienen, das durch die Oelabstreifvorrichtung von der Kolbenstange abgestreifte Oel aus dem Führungslagergehäuse herauszuführen und in das Kurbelgehäuse zurückzuleiten. Zugleich dienen diese Kanäle, die bei einem anderen Kolbenkompressor der Anmelderin durch eine am Lagergehäuse angeschlossene und in das Kurbelgehäuse mündende Leitung ersetzt sind, dem Druckausgleich zwischen dem Innern des Kurbelgehäuses und dem Maschinenraum oberhalb des Führungslagers. Im Betrieb des Kolbenkompressors kommt es vor, dass der Druck im Maschinenraum oberhalb des Führungslagers sinkt. Dies hat zur Folge, dass in den zum Kurbelgehäuse führenden Kanälen bzw. in der Leitung befindliches Oel wegen der Druckausgleichströmung in den Maschinenraum oberhalb des Führungslagers mitgerissen wird. Dies ist unerwünscht, da mit diesen Kolbenkompressoren Gase komprimiert werden, die oberhalb des Führungslagers nicht mit Schmieröl in Berührung kommen dürfen. Solche Gase sind z.B. die Kältemittel, Methan, Propan, Butan, Aethylen, Vinylchlorid, Butadien, Argon, Helium, Wasserstoff und Kohlenmonoxid.

Der Erfindung liegt die Aufgabe zugrunde, einen Kolbenkompressor der eingangs genannten Art dahingehend zu verbessern, dass ein Mitreissen von Schmieröl in den Maschinenraum oberhalb des Führungslagers sicher vermieden ist.

Diese Aufgabe wird erfindungsgemäss durch die Merkmale des Kennzeichens des Anspruchs 1 gelöst.

Durch diese Ausbildung des Führungslagergehäuses wird das während der zum Zylinder gerichteten Bewegung der Kolbenstange von dieser abgestreifte Oel gezwungen, auf dem Weg, auf dem es in das Lagergehäuse gelangt ist, nämlich dem Schmierspalt zwischen Lagerpartie und Kolbenstange, wieder in das Kurbelgehäuse zurückzukehren. Wegen dieser Rückführung des Schmieröls über den Schmierspalt ist die Lagerpartie im Betrieb des Kompressors gasdicht. Durch die erfindungsgemässe Ausbildung des Führungslagergehäuses entfällt also eine Rückführ- und Druckverbindung, wodurch auch eine konstruktive Vereinfachung erreicht wird. Zugleich ist ein durch Gasdruckunterschiede bedingtes Mitreissen von rückzuführendem Oel in den Maschinenraum oberhalb des Führungslagers sicher vermieden. Ein weiterer Vorteil ist darin zu sehen, dass es nunmehr wegen der gasdichten Lagerpartie möglich ist, im Kurbelgehäuse einen Gasdruck aufrechtzuerhalten, der sich vom im Maschinenraum oberhalb des Führungslagers herrschenden Gasdruck beträchtlich unterscheidet.

Einige Ausführungsbeispiele der Erfindung sind in der folgenden Beschreibung anhand der Zeichnung näher erläutert. Es zeigen:
- Fig.1: einen schematisch stark vereinfachten Vertikalschnitt durch einen Kolbenkompressor,
- Fig.2: einen Vertikalschnitt durch eine erste Ausführungsform des Führungslagers eines Kolbenkompressors,
- Fig.2a: vergrössert ein Detail A der Lagerpartie in Fig.2 und
- Fig.3 u.4: je einen Vertikalschnitt durch zwei weitere Ausführungsformen von Kolbenstangenführungslagern.

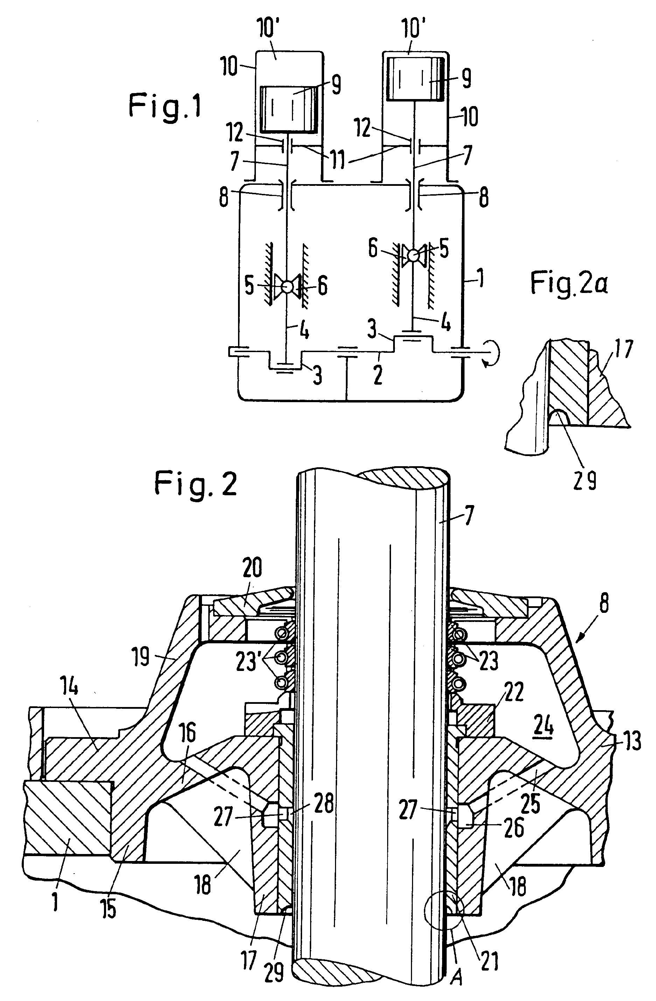

Gemäss Fig.1 weist der Kolbenkompressor ein Kurbelgehäuse 1 auf, in dessen unterem Teil eine Kurbelwelle 2 gelagert ist. Die Kurbelwelle 2 weist zwei um 180° versetzte Kröpfungen 3 auf, an denen je eine Pleuelstange 4 angeschlossen ist, die an ihrem oberen Ende mit je einem Zapfen 5 in einem geradlinig auf und ab beweglichen Kreuzkopf 6 gelenkig verbunden sind. An jedem Kreuzkopf 6 ist eine Kolbenstange 7 befestigt, die das obere Ende des Kurbelgehäuses 1 im Bereich je eines Führungslagers 8 durchdringt und die an ihrem oberen Ende einen Kolben 9 trägt. Jeder Kolben 9 ist berührungsfrei in einem Zylinder 10 geführt und wird von der Kolbenstange 7 vertikal auf- und abbewegt. Bei der Abwärtsbewegung des Kolbens 9 wird in den Zylinderraum 10' zu komprimierendes Gas angesaugt, das bei der Aufwärtsbewegung dann komprimiert wird. Jeder Zylinder 10 ist nach unten bis zum Kurbelgehäuse 1 verlängert und auf diesem befestigt. Nahe der tiefsten Stellung des Kolbens 9 weist jeder Zylinder 10 eine Stirnwand 11 auf, die im Durchtrittsbereich der Kolbenstange 7 mit einer die jeweilige Kolbenstange umschliessenden Dichtung 12 versehen ist.

Gemäss Fig.2 besteht das Führungslager 8 im wesentlichen aus einem Gehäuse 13, das mit einem äusseren Flansch 14 versehen ist, mit dem es auf dem Kurbelgehäuse 1 befestigt ist. Unterhalb des Flansches 14 weist das Gehäuse einen zylindrischen Ringabschnitt 15 auf, der in eine entsprechende Bohrung des Kurbelgehäuses 1 ragt und damit das Führungslagergehäuse 13 zentriert. Vom oberen Ende des Ringabschnittes 15 aus erstreckt sich gegen die Kolbenstange 7 und etwas nach oben ansteigend ein Wandabschnitt 16, der in einen die Kolbenstange umgebenden nabenförmigen Abschnitt 17 übergeht. Die Abschnitte 16 und 17 sind durch mehrere radiale Rippen 18 versteift. Zwischen dem Wandabschnitt 16 und dem Flansch 14 weist das Gehäuse 13 einen hohlkegeligen, sich nach oben erstreckenden Abschnitt 19 auf, an dessen oberen Ende ein kragenartiger, die Kolbenstange 7 umgebender Deckel 20 befestigt ist.

Zwischen dem nabenförmigen Abschnitt 17 und der Kolbenstange 7 ist eine Büchse 21 als Lagerpartie eingesetzt, die mit einem oberen Flansch auf der Stirnfläche des Abschnitts 17 ruht und mittels eines Ringes 22 im Gehäuse 13 befestigt ist. Oberhalb des Ringes 22 sind im Gehäuse 13 drei Oelabstreifringe 23 angeordnet, von denen jeder geschlitzt ist und mittels einer Schlauchfeder 23' gegen die Kolbenstange 7 gedrückt wird.

Der Wandabschnitt 16 und der untere Teil des hohlkegeligen Abschnitts 19 begrenzen einen ringförmigen Sammelraum 24 für Schmieröl. Zwischen der Innenfläche der Büchse 21 und der Kolbenstange 7 besteht ein Schmierspalt, durch den hindurch Schmieröl während der Aufwärtsbewegung der Kolbenstange mitgenommen wird, die innerhalb des Kurbelgehäuses 1 durch Spritzöl benetzt wird. Nachdem das auf der Kolbenstange 7 haftende Oel den Schmierspalt passiert hat, wird es während der Aufwärtsbewegung mittels der Oelabstreifringe 23 von der Kolbenstange 7 abgestreift und sammelt sich im Ringraum 24. Das Niveau des sich so bildenden Oelbades schwankt in gewissen Grenzen im Takt der Kolbenstangenbewegung, wobei das höchste Niveau stets unterhalb der unteren Begrenzung des untersten Oelabstreifringes 23 bleibt.

Nahe der tiefsten Stelle des Ringraumes 24 sind im Gehäuse 13 Bohrungen 25 vorgesehen, die sich schräg nach unten durch den Wandabschnitt 16, jeweils eine radiale Rippe 18 und in den nabenförmigen Abschnitt 17 erstrecken. Die Bohrungen 25 münden in eine im Abschnitt 17 befindliche Ringnut 26, die über mehrere, in der Büchse 21 angebrachte radiale Bohrungen 27 und eine ebenfalls in der Büchse 21 angebrachte Ringnut 28 mit dem Schmierspalt kommuniziert. Während die obere Begrenzung der Ringnut 28 etwa rechtwinklig zur Kolbenstange 7 verläuft und am Uebergang zum Schmierspalt eine scharfe Kante bildet, verläuft die untere Begrenzung konvex gewölbt, so dass sie ohne scharfe Kante in die zylindrische Innenfläche der Büchse 21 übergeht. Auf diese Weise wird erreicht, dass sich das im Ringraum 24 angesammelte Oel während der Abwärtsbewegung der Kolbenstange 7 über die Bohrungen 25, 27 und die Ringnut 28 zum Schmierspalt fliesst und von dort wieder in das Innere des Kurbelgehäuses 1 zurückgefördert wird.

Die untere Stirnfläche der Büchse 21 weist gemäss Fig.2a eine Hohlkehle 29 auf, die mit der Innenfläche der Büchse eine spitzwinklige Kante bildet, die während der Aufwärtsbewegung der Kolbenstange 7 ein Abstreifen von überschüssigem Oel bewirkt, das dann direkt in das Kurbelgehäuse 1 zurückfliesst, d.h. ohne den Schmierspalt zu passieren.

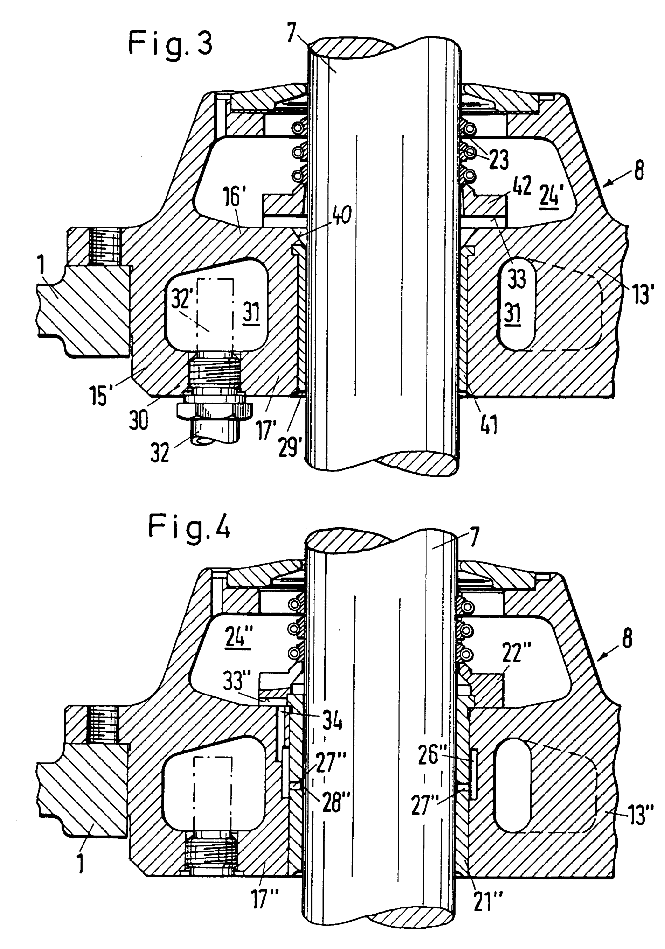

Gemäss Fig.3 kann für das Führungslager 8 auch ein Gehäuse 13' verwendet werden, das wassergekühlt ist. Zu diesem Zweck ist zwischen dem unteren Ende des Ringabschnittes 15' und dem unteren Ende des nabenförmigen Abschnittes 17' ein horizontaler Wandabschnitt 30 vorgesehen, so dass zwischen diesem und dem Wandabschnitt 16' ein ringförmiger Hohlraum 31 entsteht. Dieser Hohlraum 31 ist mit einem Kühlwasseranschluss 32 versehen, über den Kühlwasser zugeführt wird. Für den Abfluss des Kühlwassers ist am Hohlraum 31 ein in diesen ragender Kühlwasseranschluss 32' vorhanden, der - abweichend von der Darstellung in Fig.3 - in Umfangsrichtung des Gehäuses 13' versetzt zum Anschluss 32 angeordnet ist.

Abweichend von dem Ausführungsbeispiel nach Fig.2 ist gemäss Fig.3 anstelle der Büchse 21 ein Lagermetallmantel 41 als Lagerpartie in den Abschnitt 17' eingegossen. Oberhalb des Mantels 41 ist das Gehäuse 13' kegelig ausgedreht, so dass an dieser Stelle der Eintritt zum Schmierspalt eine trichterförmige Erweiterung 40 bildet. Ein ringförmiger Fortsatz 42 des Gehäuses 13', auf dem sich die Oelabstreifringe 23 abstützen, hat an der tiefsten Stelle des Ringraumes 24' radiale Nuten 33, um ein Zufliessen von Oel aus dem Raum 24' zu der trichterartigen Erweiterung 40 zu ermöglichen. Zu diesem Zweck ist auch die den Ringraum 24' begrenzende Fläche des Wandabschnitts 16' gegen aussen etwas ansteigend ausgebildet.

Im Betrieb des Kompressors wird das auf die Kolbenstange 7 im Kurbelgehäuse 1 aufgebrachte Schmieröl während der Aufwärtsbewegung von der spitzwinkligen Kante an der Hohlkehle 29' abgestreift und gelangt ins Kurbelgehäuse zurück. Das den Schmierspalt passierende Schmieröl wird von den Oelabstreifringen 23 abgestreift und sammelt sich im Ringraum 24', wo es eine Oelvorlage bildet. Während der Abwärtsbewegung der Kolbenstange 7 wird Oel aus dem Ringraum 24' über die radialen Nuten 33 und die trichterartige Erweiterung 40 dem Schmierspalt zugeführt und von der Kolbenstange 7 in das Kurbelgehäuse 1 zurückbefördert.

Bei dem Ausführungsbeispiel nach Fig.4 ist das Führungslagergehäuse 13'' wiederum wassergekühlt, jedoch ist eine Büchse 21'' ähnlich angeordnet und ausgebildet wie die Büchse 21 in Fig.2. Die Führungsbüchse 21'' besitzt eine Ringnut 28'' sowie mehrere radiale Bohrungen 27'', die mit einer Ringnut 26'' im nabenförmigen Abschnitt 17'' kommunizieren. Die Ringnut 26'' ist über mehrere vertikale Kanäle 34 im Abschnitt 17'' und radiale Nuten 33'' an der Unterseite des Befestigungsringes 22'' mit dem Oelbad im Ringraum 24'' in Verbindung. In Fig.4 ist der Einfachheit halber nur eine Nut 33'' und ein Kanal 34 dargestellt.

Das während der Aufwärtsbewegung der Kolbenstange 7 von den Oelabstreifringen 23 abgestreifte und im Ringraum 24'' gesammelte Oel gelangt also beim Ausführüngsbeispiel nach Fig.4 über die Nuten 33'', die Kanäle 34, die Ringnut 26'', die Bohrungen 27'' und die Ringnut 28'' zum Schmierspalt und wird bei der Abwärtsbewegung der Kolbenstange 7 in das Kurbelgehäuse 1 zurückbefördert.

Abweichend von den beschriebenen Ausführungsbeispielen können die Zylinder 10 auch in an sich bekannter V-Anordnung am Kurbelgehäuse angebracht sein. Statt berührungsfrei im Zylinder geführter Kolben können auch Kolben mit Teflonringen verwendet werden.

## Patentansprüche

1. Kolbenkompressor mit mindestens einem Zylinder und einem darin geführten Kolben, der über eine Kolbenstange und einen Kreuzkopf von einer in einem Kurbelgehäuse gelagerten Kurbelwelle angetrieben ist, wobei der Zylinder an seinem dem Kreuzkopf zugewendeten Ende eine die Kolbenstange umschliessende Dichtung aufweist und zwischen dem Kreuzkopf und dieser Dichtung ein ölgeschmiertes Kolbenstangenführungslager vorgesehen ist, das ein Lagergehäuse aufweist, das auf der dem Kreuzkopf zugewendeten Seite eine die Kolbenstange umschliessende Lagerpartie enthält, die zwischen sich und der Kolbenstange einen Schmierspalt bildet, wobei das Lagergehäuse auf der dem Zylinder zugewendeten Seite mit Abstand von der Lagerpartie eine Oelabstreifvorrichtung aufweist und wobei während des zum Zylinder gerichteten Hubes von der Kolbenstange aus dem Kurbelgehäuse über den Schmierspalt mitgeschlepptes und mittels der Oelabstreifvorrichtung von der Kolbenstange abgestreiftes Schmieröl aus dem Lagergehäuse abgeführt wird,
dadurch gekennzeichnet, dass im Lagergehäuse ein Sammelraum vorgesehen ist, in dem das während des zum Zylinder gerichteten Hubes abgestreifte Schmieröl eine Oelvorlage bildet, dass der Sammelraum eine Verbindung zum Schmierspalt aufweist und dass das Lagergehäuse im Bereich der Oelvorlage nach aussen abflusslos ist.

2. Kompressor nach Anspruch 1, dadurch gekennzeichnet, dass die Verbindung vom Sammelraum zum Schmierspalt aus einer trichterartigen Erweiterung besteht, die sich an dem der Oelabstreifvorrichtung zugewendeten Ende der Lagerpartie befindet.

3. Kompressor nach Anspruch 1, dadurch gekennzeichnet, dass die Verbindung vom Sammelraum zum Schmierspalt aus mindestens einem Kanal besteht, der von der tiefsten Stelle der Oelvorlage ausgeht und etwa in der Mitte der Länge des Schmierspaltes ausmündet.

4. Kompressor nach einem der Ansprüche 1 bis 3, dadurch gekennzeichnet, dass die Lagerpartie aus einer in das Lagergehäuse eingesetzten Büchse besteht.

5. Kompressor nach einem der Ansprüche 1 bis 3, dadurch gekennzeichnet, dass die Lagerpartie aus einem in das Lagergehäuse eingegossenen Lagermetallmantel besteht.

6. Kompressor nach einem der Ansprüche 1 bis 5, dadurch gekennzeichnet, dass der Kolben berührungslos im Zylinder geführt ist.

## Claims

1. Reciprocating compressor with at least one cylinder and a piston, which is guided in the latter and driven by a crankshaft, which is mounted in a crankcase, via a piston rod and a crosshead, the cylinder comprising a seal, which surrounds the piston rod, at its end which faces the crosshead, an oil-lubricated piston rod guide bearing being provided between the crosshead and this seal, which bearing comprises a bearing housing containing on the side which faces the crosshead a bearing part which surrounds the piston rod and between which and the piston rod a lubricating gap is formed, the bearing housing comprising an oil scraper at a distance from the bearing part on the side which faces the cylinder, and lubricating oil which is entrained by the piston rod out of the crankcase via the lubricating gap and scraped off the piston rod by means of the oil scraper during the stroke towards the cylinder being discharged from the bearing housing, characterised in that the bearing housing comprises a collecting space in which the lubricating oil which is scraped off during the stroke towards the cylinder forms an oil reservoir, that the collecting space comprises a connection to the lubricating gap, and that the bearing housing has no outlet to the exterior in the area of the oil reservoir.

2. Compressor according to claim 1, characterised in that the connection from the collecting space to the lubricating gap consists of a funnel-like enlargement, which is disposed at the end of the bearing part which faces the oil scraper.

3. Compressor according to claim 1, characterised in that the connection from the collecting space to the lubricating gap consists of at least one duct, which starts from the lowest point of the oil reservoir and opens out approximately half-way along the lubricating gap.

4. Compressor according to one of claims 1 to 3, characterised in that the bearing part consists of a bush, which is inserted in the bearing housing.

5. Compressor according to one of claims 1 to 3, characterised in that the bearing part consists of a bearing metal shell, which is cast into the bearing housing.

6. Compressor according to one of claims 1 to 5, characterised in that the piston is guided in a non-contacting manner in the cylinder.

## Revendications

1. Compresseur à pistons comprenant au moins un cylindre et un piston guidé dans ce dernier et commandé par l'intermédiaire d'une tige et d'une crosse par un vilebrequin monté dans un carter, le cylindre comportant à l'extrémité tournée vers la crosse un joint d'étanchéité entourant la tige de piston et un palier de guidage de la tige de piston qui est lubrifié à l'huile et qui est prévu entre la crosse et ce joint d'étanchéité, comprenant un logement qui comporte du côté tourné vers la crosse un coussinet entourant la tige de piston et formant entre lui et cette tige un interstice de lubrification, le logement du palier comportant sur le côté tourné vers le cylindre un dispositif racleur d'huile placé à distance du coussinet et l'huile de lubrification qui est entraînée par la tige de piston hors du carter du vilebrequin par l'interstice de lubrification pendant la course orientée vers le cylindre et qui est enlevée de la tige de piston par le dispositif racleur étant évacuée du logement du palier, caractérisé en ce qu'une chambre collectrice, dans laquelle l'huile enlevée par raclage pendant la course dirigée vers le cylindre est recueillie, est prévue dans le logement du palier, en ce que la chambre collectrice comporte une communication avec l'interstice de lubrification et en ce que le logement du palier ne comporte aucun écoulement vers l'extérieur dans la région dans laquelle l'huile est recueillie.

2. Compresseur selon la revendication 1, caractérisé en ce que la communication entre la chambre collectrice et l'interstice de lubrification consiste en un élargissement en forme d'entonnoir qui se trouve à l'extrémité du coussinet qui est tournée vers le dispositif racleur d'huile.

3. Compresseur selon la revendication 1, caractérisé en ce que la communication entre la chambre collectrice et l'interstice de lubrification consiste en au moins un canal qui part de la région la plus basse dans laquelle l'huile est recueillie et qui débouche à peu près dans le milieu de la longueur de l'interstice de lubrification.

4. Compresseur selon l'une des revendications 1 à 3, caractérisé en ce que le coussinet consiste en un manchon monté dans le logement du palier.

5. Compresseur selon l'une des revendications 1 à 3, caractérisé en ce que le coussinet consiste en une enveloppe de métal antifriction coulée dans le logement du palier.

6. Compresseur selon l'une des revendications 1 à 5, caractérisé en ce que le piston est guidé sans contact dans le cylindre.
